# EUROPEAN PATENT SPECIFICATION

(11) **EP 3 250 330 B1**
(45) Date of publication and mention of the grant of the patent: **18.03.2020**
(21) Application number: 15708320.5
(22) Date of filing: 30.01.2015
(51) Int. Cl.: B09B 3/00, A47J 31/44, B09B 5/00

(54) **AN APPARATUS FOR TREATING USED CAPSULES AND/OR CARTRIDGES, FOR EXAMPLE OF COFFEE OR SOME OTHER INFUSION, FOR SEPARATION OF THE ORGANIC MATERIAL FROM THE REST OF THE PACK**
VORRICHTUNG ZUR BEHANDLUNG VON GEBRAUCHTEN KAPSELN UND/ODER KARTUSCHEN WIE Z. B. VON KAFFEE ODER EINIGER ANDEREN AUFGÜSSEN, ZUM TRENNEN DES ORGANISCHEN MATERIALS VOM REST DES PACKS
APPAREIL DE TRAITEMENT DE CAPSULES USAGÉES ET/OU DE CARTOUCHES, PAR EXEMPLE DE CAFÉ OU D'UNE AUTRE INFUSION, POUR LA SÉPARATION DE LA MATIÈRE ORGANIQUE DU RESTE DE L'EMBALLAGE

(43) Date of publication of application: 06.12.2017
(73) Proprietor: Ceccarelli, Stefano, 02100 Rieti (RI) (IT); Costantini, Paolo, 00199 Roma (RM) (IT)
(72) Inventor: Ceccarelli, Stefano, 02100 Rieti (RI) (IT); Costantini, Paolo, 00199 Roma (RM) (IT)
(74) Representative: Fezzardi, Antonio
(86) International application number: PCT/IB2015/050718
(87) International publication number: WO 2016/120667

(56) References cited:
- WO-A1-88/00908
- WO-A1-2009/153298
- WO-A1-2011/051867
- FR-A1- 2 916 126
- JP-A- 2001 121 009
- JP-A- 2009 173 294
- US-A- 5 924 834

## Description

The present invention relates to the sector of electrical household appliances and in particular regards an apparatus designed to tear/split or divide into two or more parts the pack of the cartridge and/or capsule and consequently cause exit of the dregs of coffee so as to separate the organic part from the pack, thus guaranteeing the possibility of disposing of the organic waste separately from the waste of the pack, which is recyclable.

For brevity of exposition, in the present patent text reference will be made to capsules, but it is to be understood that the invention may be applied indifferently to capsules and/or cartridges.

According to the invention, the above apparatus may be positioned directly in domestic premises, for example, in a kitchen, or else may be installed directly inside larger coffee-vending machines (obviously, ones that use cartridges or capsules), such as the ones installed in offices, firms, and restaurants, and in general where espresso-coffee machines that use capsules are present (such as, for example, on board trains, aircraft, cruise liners, etc.) .

Another possibility is to install the apparatus described in a stand-alone way, obviously within a purposely designed box, pre-arranged for receiving from outside the spent capsules to be treated.

It is known, from WO 2009/153298, a capsule-treatment machine arranged for separating a packaging of a capsule, in particular made of metal such as aluminum and/or plastic, from a capsule food or beverage ingredient contained therein.

It is also known, from US5924834, a machine which agitates and rips scrap metal containers such as scrap aluminum cans to expose their interiors and shake out sand, dirt, and other material in the cans. Alternatively, the containers may comprise shell casings which the machine deforms by thrashing.

It is further known, from WO 2011/051867, a separating device which is designed to separate used capsules from spent portions of substances contained in said used capsules.

Known to the art are devices for separating the organic material contained in spent capsules from the rest of the pack, but a problem common to these apparatuses is represented by the fact that said separation is not complete, and consequently the treated packs are not completely emptied of their original organic contents. This prevents disposal thereof as differentiated waste, substantially rendering vain the treatment of the spent capsules that is carried out using said known apparatuses. The current alternative would be to subject the treated capsules to additional processes in order to eliminate from the packs the residue of organic material, with evident supplementary costs.

Another problem of these known apparatuses is represented by their very large dimensions, which render them usable only at an industrial level.

Currently, there are not known electrical household appliances or apparatuses of small dimensions that are able to treat coffee capsules to facilitate ecological disposal/recycling thereof, i.e., that are able to perform complete separation, collection, and storage of the various materials comprised in each capsule so as to "convert" spent capsules from undifferentiated waste (as they are currently considered) to waste that is separated, differentiated, and hence recyclable and/or easily disposable.

The above entails a series of drawbacks.

A first drawback is represented by the fact that said capsules are by now filling refuse dumps.

A second drawback, deriving from the first, is that the lack of recycling of the recyclable parts of the capsules, which are usually made of aluminium and/or plastic, renders the capsules themselves more costly.

Consequently, some firms that produce capsules are currently seeking to encourage consumers to take the spent capsules back to where they were originally purchased so that they can then treat them at an industrial level to separate and recycle the materials that make them up.

The purpose of the present invention is to overcome the above drawbacks by providing an apparatus that can be installed directly where the capsules are used in order to be able to carry out separation of the materials of which the coffee capsules are made up immediately after their use so that it will be possible to collect the recyclable materials separately from the organic ones in order to facilitate differentiated collection, which by now is increasingly widespread.

According to the invention, the foregoing has been achieved by providing an apparatus that comprises, in combination:
- a light supporting structure, which can be assembled with extreme ease, is preferably transparent, and is provided with a compartment for receiving and treating the capsules of coffee or some other infusion;
- mechanical means, which are pre-arranged in said purposely provided compartment for treating the capsules and are designed to tear or break the packs thereof and consequently separate the organic contents from the various materials that constitute the packs, gathering the organic contents and the packs, respectively, in a first collection container and in a second collection container, which are distinct from one another and can be emptied into the normal containers provided for differentiated refuse collection;

- an inlet opening that enables said spent capsules to enter the treatment compartment, for example by dropping by gravity;
- means for conveying the organic material coming out of the treated capsules into the purposely provided collection container;
- a first container, designed to receive the dregs of coffee or other infusion that have been separated from the rest of the capsule and that constitute an organic waste; and
- a second container, designed to receive the remains of the packs of the capsules that have been separated from the organic materials and that constitute recyclable waste material comprising paper, aluminium, plastic, etc.

The fact of providing a transparent structure advantageously makes it possible to check whether the capsules have been completely torn open and emptied.

A better understanding of the invention will be obtained from the ensuing detailed description and with reference to the attached drawings, which illustrate, merely by way of example, some preferred embodiments.

In the drawings:
Figures 1A and 1B are schematic illustrations of a first embodiment of the apparatus forming the subject of the invention, respectively in longitudinal sectional view and in top plan view;
Figure 2 shows an exploded longitudinal section of the apparatus of Figure 1A, where the capsules drop from the apparatus into the container for treatment thereof; and
Figure 3, which is similar to Figure 1A, shows a second embodiment particularly suited for being applied to automatic dispensers, such as vending machines.

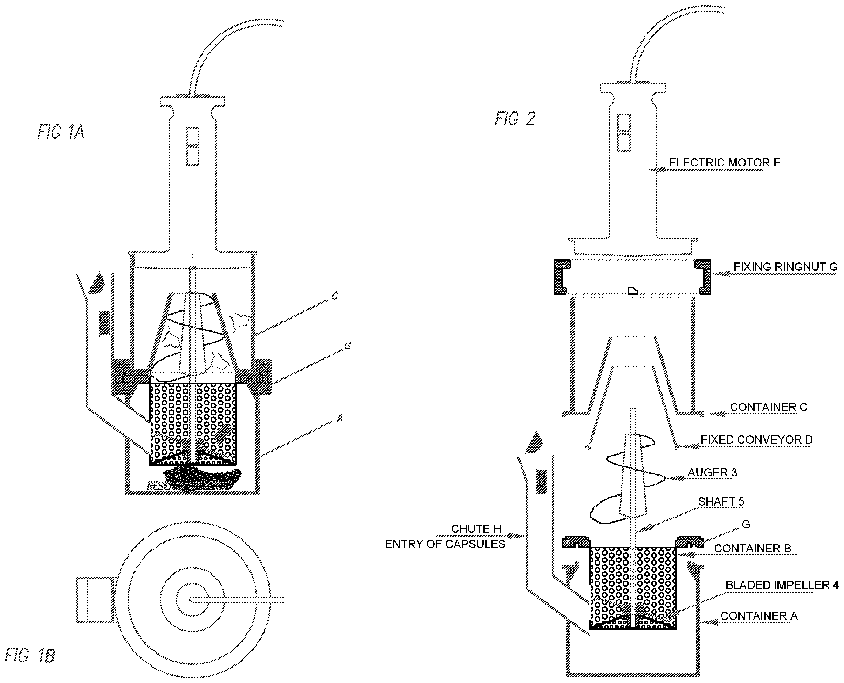

With reference to Figures 1A, 1B, and 2, in a first embodiment of the invention that is described, an apparatus for domestic use for treating capsules is provided, basically made up of:
- a bottom container A, which is designed to collect the organic remains and to support basically the entire load-bearing structure of the apparatus;
- a container B, located inside the previous one, which constitutes the treatment compartment and is provided with perforated walls, housed inside which is a bladed impeller 4 set in rotation by means of a shaft 5;
- an auger 3 with multiple starts and/or variable pitch, which is fixed with respect to said shaft 5;
- a fixed conveyor D, set on the upper part of the perforated container B where the capsules are treated;
- a top container C for collecting and storing the packs of the treated capsules;
- a fixing ringnut G for keeping the various parts firmly constrained together; and
- an electric motor E, which is preferably removable and is designed to be driven by the user to turn the shaft 5 whenever at least one spent capsule to be treated is introduced.

According to the invention, by cutting up/tearing the pack of each capsule via said one or more blades of the bottom impeller 4 of different shape and size, mechanical separation of the organic material from the rest of the pack is obtained, and at the same time the organic waste is made to exit from the treatment compartment B through a plurality of self-cleaning holes or slots purposely provided on the lateral and bottom surfaces of the treatment compartment B itself. This emptying of the torn capsules is achieved thanks to the action of the centrifugal force generated by the rotary motion imparted by the blades of the impeller 4.

According to a peculiar characteristic of the invention, the inner surface of the perforated walls of the compartment B for treatment of the and capsules may be provided with elements in relief or with recesses appropriately positioned to prevent the capsules from possibly remaining stuck to the blades of the impeller 4 and turning together with them without tearing.

The central body comprises means for conveying the empty pack of each capsule (and its possible bits), which consist of a conical auger 3 with variable diameter that is encased in a fixed conical conveyor D, which enables guiding of the material that the auger conveys.

In this connection, it should be noted that said auger 3 and the corresponding fixed conveyor D may even be cylindrical instead of conical.

The auger 3 also generates a slight movement of air that is able to entrain (and hence convey) upwards only the empty packs, which are particularly light because they are without their organic contents. In particular, it is preferable also for the blades of the impeller 4 to be shaped so as to generate a movement of the capsules that tends to push them concordantly with the movement of the air generated by the auger 3.

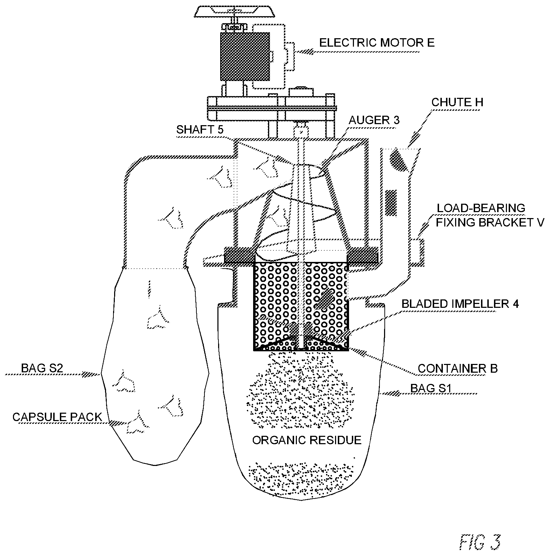

Figure 3, which regards a second embodiment of the invention, shows an example designed for being installed inside a vending machine for coffee (or other infusions) used in firms or commercial premises that functions with capsules.

According to the invention, the inventive idea of separating the various materials that make up the capsules remains unvaried.

In this case, the device described comprises, in combination:
- a bag S1 for collecting organic waste;
- an assembly for tearing/emptying the capsules, similar to the previous one;
- a second bag S2 for collecting the emptied packs, which is provided as an alternative to the top container C;

- a container B that constitutes the compartment for treatment of the capsules, which is located inside the bag S1 and is provided with perforated walls, and housed inside which is a bladed impeller 4 set in rotation by means of a shaft 5;
- an auger 3 with multiple starts and/or variable pitch, which is fixed with respect to said shaft 5, wherein said auger 3 co-operates together with a fixed conveyor D associated thereto for sending the empty packs of the capsules upwards so that they reach said second bag S2 set preferably at one side;
- an electric motor E, which, via the shaft 5, drives the auger 3 and the bladed bottom impeller 4;
- a chute H for getting the capsules to enter the treatment compartment in the bottom container B.

It should be noted that it may also be envisaged that the treatment of breaking/tearing of the capsules is obtained with the impeller 4 that turns in the direction opposite to the direction of the auger 3. In this case, after the capsules have been torn, the direction of rotation of the motor can be reversed so that the impeller can entrain the empty packs and expel them.

The entire operating cycle may be performed manually by the user, i.e., visually checking progress thereof, or else automatically under the control of an electronic card, which, by means of appropriate sensors positioned in strategic points, keeps the apparatus in safe running conditions and checks for the presence of capsules to be treated in order to activate the device when necessary.

The means designed to drive the apparatus described comprise an electrical system with at least two pushbuttons:
- a main ON/OFF switch; and
- a switch for start of the treatment cycle.

It is preferable to provide, especially in the case of automatic operation, warning lights that signal that the apparatus according to the invention is on, that capsules to be treated are present, that treatment is through, etc.

It should be recalled that what has been described so far as regards the present invention for treatment of capsules may be applied, without any modifications, to the treatment of the well-known cartridges made of plastic, aluminium, etc.

## Claims

1. An apparatus for treating spent cartridges and/or capsules, for example of coffee or some other infusion, in order to separate the organic material from the rest of the pack, comprising, in combination:
- a light supporting structure, which can be assembled with extreme ease, is preferably transparent, and is provided with a compartment for receiving and treating the capsules of coffee or some other infusion;
- mechanical means provided in said purposely designed compartment for treating the cartridges and/or capsules, which are designed to break or tear the pack and consequently separate the organic contents from the various materials that constitute the packs, gathering the organic contents and the packs, respectively, in a first collection container (A) and in a second collection container (C), distinct from one another, which can be emptied into the normal containers provided for differentiated refuse collection;
- an inlet opening (H) for entry of said spent cartridges and/or capsules into the treatment compartment, for example by dropping by gravity or via a motor-driven system;
- means for conveying the organic material coming out of the treated cartridges and/or capsules into a purposely provided collection container;
- a first container (A), designed to receive the dregs of coffee or other infusion that have been separated from the rest of the cartridge and/or capsule and that constitute the organic waste material, basically constituted by a bottom container (A) designed to collect the organic residue and to support the entire load-bearing structure of the electrical household appliance; and
- a second container (C), designed to receive the remains of the packs of the cartridges and/or capsules that have been separated from the organic materials and that constitute recyclable waste comprising paper, aluminium, plastic, etc., basically constituted by a top container (C) for collecting and storing the packs of the treated cartridges and/or capsules;
wherein:
- said compartment for the treatment of the cartridges and/or capsules is basically constituted by a container (B) located inside the bottom container (A) and is provided with perforated walls, and housed therein is a bladed impeller (4) set in rotation by means of a shaft (5);
- a cylindrical or conical auger (3) is provided with variable diameter and with multiple starts and/or variable pitch, which is fixed with respect to said shaft (5) for conveying the cartridges and/or capsules that have been treated and are without organic material towards said top container (C);
- a fixed conveyor (D) is set on the upper part of the perforated container (B) where the cartridges and/or capsules are treated;
- a fixing ringnut (G) is provided for keeping the various parts firmly constrained together; and
- a preferably removable electric motor (E) is provided, designed to be driven by the user to turn the shaft (5) whenever at least one spent cartridge and/or capsule to be treated is introduced.

2. The apparatus according to Claim 1, **characterized in that** said one or more blades of the bottom impeller (4) are of different shape and size for cutting up/tearing the pack of each capsule, as well as for imposing a rotary motion on the torn or capsules that generates the centrifugal force necessary for obtaining mechanical separation of the organic material from the rest of the capsule and simultaneous exit of said organic material from the treatment compartment (B) through a plurality of self-cleaning holes or slots purposely provided on the lateral surface of the treatment compartment (B) itself.

3. The apparatus according to Claim 2, **characterized in that** it envisages a central body comprising means for conveying the empty pack of each capsule, which basically consist of a conical auger (3) encased in a fixed conical conveyor (D), which is designed to guide the material that the auger conveys.

4. The apparatus according to Claim 3, **characterized in that** the auger also generates a movement of air that is able to entrain and convey upwards only the empty packs, which are particularly light because they are without their organic contents.

5. The apparatus according to Claim 2, **characterized in that** the inner surface of the perforated walls of the compartment (B) for treatment of the capsules is provided with elements in relief or with recesses appropriately positioned to prevent the capsules from possibly remaining stuck to the blades of the impeller (4) and turning together with them without tearing.

6. The apparatus according to any one of the preceding claims, **characterized in that** the electric motor (E) is in the top part of the device or else in the bottom part thereof.

7. The apparatus according to any one of the preceding claims, **characterized in that** the operating cycle is managed manually by the user, i.e., by visually checking progress thereof, or else automatically under the control of an electronic card that, by means of appropriate sensors positioned in strategic points, keeps the apparatus in safe running conditions and checks for the presence of capsules to be treated to activate the device when necessary.

8. The apparatus according to Claim 7, **characterized in that** it comprises an electrical system with at least two pushbuttons:
- a main ON/OFF switch; and
- a switch for start of the treatment cycle.

9. The apparatus according to Claim 8, **characterized in that** it envisages warning lights that signal that the apparatus according to the invention is on, that capsules to be treated are present, that treatment is through.

## Patentansprüche

1. Vorrichtung zur Behandlung gebrauchter Kartuschen und/oder Kapseln, zum Beispiel Kaffee oder einer anderen Infusion, um das organische Material vom Rest des Packs zu trennen, umfassend in Kombination:
- eine leichte Stützstruktur, die extrem einfach zusammengebaut werden kann, vorzugsweise transparent ist und mit einem Fach zum Aufnehmen und Behandeln der Kapseln von Kaffee oder einer anderen Infusion versehen ist;
- mechanische Mittel, die in dem zweckmäßig gestalteten Fach zur Behandlung der Kartuschen und/oder Kapseln vorgesehen sind, die gestaltet sind, das Pack zu brechen oder aufzureißen und anschließend den organischen Inhalt von den verschiedenen Materialien zu trennen, die die Packs bilden, den organischen Inhalt und die Packs in einem ersten Sammelbehälter (A) beziehungsweise in einem zweiten Sammelbehälter (C) voneinander getrennt zu sammeln, die in die normalen Behälter entleert werden können, die für getrennte Abfallsammlung vorgesehen sind;
- eine Einlassöffnung (H) für einen Eintritt gebrauchter Kartuschen und/oder Kapseln in das Behandlungsfach, zum Beispiel durch Herabfallen mittels Schwerkraft oder über ein motorangetriebenes System;
- Mittel zum Befördern des organischen Materials, das von den gebrauchten Kartuschen und/oder Kapseln kommt, in einen absichtlich vorgesehenen Sammelbehälter;
- einen ersten Behälter (A), der gestaltet ist, den Satz von Kaffee oder einer anderen Infusion aufzunehmen, der vom Rest der Kartusche und/oder Kapsel getrennt wurde und der das organische Abfallmaterial bildet, der im Prinzip durch einen unteren Behälter (A) gebildet ist, um den organischen Rest zu sammeln und die gesamte lasttragende Struktur des elektrischen Haushaltsgeräts zu stützen; und
- einen zweiten Behälter (C), der gestaltet ist, den Rest der Packs der Kartuschen und/oder Kapsel aufzunehmen, der von den organischen Materialien getrennt wurde und der wiederverwertbaren Abfall bildet, umfassend Papier, Aluminium, Kunststoff usw., der der im Prinzip durch einen oberen Behälter (C) zum Sammeln und Speichern der Packs der gebrauchten Kartuschen und/oder Kapseln gebildet ist;
wobei:
- das Fach für die Behandlung der Kartuschen und/oder Kapseln im Prinzip durch einen Behälter (B) gebildet ist, der sich im Inneren des unteren Behälters (A) befindet und mit perforierten Wänden versehen ist und in dem ein Flügelrad (4) untergebracht ist, das mit Hilfe einer Welle (5) in Drehung versetzt wird;
- eine zylindrische oder konische Schnecke (3) mit variablem Durchmesser und mit mehreren Starts und/oder variabler Steigung vorgesehen ist, die in Bezug auf die Welle (5) fixiert ist, um die Kartuschen und/oder Kapseln, die behandelt worden sind und frei von organischem Material sind, zum oberen Behälter (C) zu befördern;
- ein fixierter Förderer (D) auf dem oberen Teil des perforierten Behälters (B) aufgesetzt ist, wo die Kartuschen und/oder Kapseln behandelt werden;
- eine fixierte Ringmutter (G) vorgesehen ist, um die verschiedenen Teile fest zusammenzuhalten; und
- ein vorzugsweise entfernbarer Elektromotor (E) vorgesehen ist, der ausgebildet ist, von dem Benutzer angetrieben zu werden, um die Welle (5) zu drehen, sobald mindestens eine zu behandelnde gebrauchte Kartusche und/oder Kapsel eingeführt wird.

2. Vorrichtung nach Anspruch 1, **dadurch gekennzeichnet, dass** der eine oder die mehreren Flügel des unteren Laufrads (4) unterschiedliche Form und Größe zum Aufschneiden/Zerreißen des Packs jeder Kapsel aufweisen, wie auch zum Ausüben einer Drehbewegung auf die zerrissenen Kapseln, die die Zentrifugalkraft erzeugt, die notwendig ist, um eine mechanische Trennung des organischen Materials vom Rest der Kapsel und gleichzeitig einen Austritt des organischen Materials aus dem Behandlungsfach (B) durch mehrere selbstreinigende Löcher oder Schlitze zu erhalten, die absichtlich an der seitlichen Oberfläche des Behandlungsfachs (B) selbst vorgesehen sind.

3. Vorrichtung nach Anspruch 2, **dadurch gekennzeichnet, dass** sie einen zentralen Körper in Betracht zieht, umfassend ein Mittel zum Befördern des leeren Packs jeder Kapsel, das im Prinzip aus einer konischen Schnecke (3) besteht, die in einem fixierten konischen Förderer (D) eingehaust ist, der gestaltet ist, das Material zu führen, das die Schnecke befördert.

4. Vorrichtung nach Anspruch 3, **dadurch gekennzeichnet, dass** die Schnecke auch eine Luftbewegung erzeugt, die imstande ist, nur die leeren Packs mitzunehmen und nach oben zu befördern, die besonders leicht sind, da sie frei von ihrem organischen Inhalt sind.

5. Vorrichtung nach Anspruch 2, **dadurch gekennzeichnet, dass** die Innenfläche der perforierten Wände des Fachs (B) zur Behandlung der Kapseln mit Elementen im Relief oder mit Vertiefungen versehen ist, die angemessen positioniert sind, um ein mögliches Festhaften der Kapseln an den Flügeln des Laufrads (4) und ein gemeinsames Drehen mit diesen, ohne zu zerreißen, zu verhindern.

6. Vorrichtung nach einem der vorstehenden Ansprüche, **dadurch gekennzeichnet, dass** sich der Elektromotor (E) im oberen Teil der Einrichtung oder sonst in deren unterem Teil befindet.

7. Vorrichtung nach einem der vorstehenden Ansprüche, **dadurch gekennzeichnet, dass** der Betriebszyklus von dem Benutzer manuell gemanagt wird, d.h. durch visuelles Überprüfen dessen Fortschreitens, oder sonst automatisch unter der Steuerung einer elektronischen Karte, die mit Hilfe passender Sensoren, die an strategischen Punkten positioniert sind, die Vorrichtung unter sicheren Betriebsbedingungen hält und auf das Vorhandensein von Kapseln, die zu behandeln sind, prüft, um die Einrichtung bei Bedarf zu aktivieren.

8. Vorrichtung nach Anspruch 7, **dadurch gekennzeichnet, dass** sie ein elektrisches System mit mindestens zwei Drucktasten umfasst:
- einem EIN/AUS-Schalter; und
- einem Schalter zum Starten des Behandlungszyklus.

9. Vorrichtung nach Anspruch 8, **dadurch gekennzeichnet, dass** sie Warnlichter in Betracht zieht, die signalisieren, dass die erfindungsgemäße Vorrichtung eingeschaltet ist, dass zu behandelnde Kapseln vorhanden sind, dass Behandlung beendet ist.

## Revendications

1. Appareil de traitement de cartouches et/ou capsules usagées, par exemple de café ou d'une autre infusion, afin de séparer la matière organique du reste de l'emballage, comprenant, en combinaison :
- une structure de support légère, qui peut être assemblée avec une extrême facilité, est de préférence transparente, et est munie d'un compartiment pour recevoir et traiter les capsules de café ou d'une autre infusion ;
- des moyens mécaniques fournis dans ledit compartiment conçu à cet effet pour traiter les cartouches et/ou capsules, qui sont conçus pour rompre ou déchirer l'emballage et par conséquent séparer le contenu organique des divers matériaux qui constituent les emballages, regrouper le contenu organique et les emballages, respectivement, dans un premier bac de collecte (A) et dans un second bac de collecte (C), distincts l'un de l'autre, qui peuvent être vidés dans les bacs normaux fournis pour la collecte différenciée des ordures ;
- une ouverture d'entrée (H) pour l'entrée desdites cartouches et/ou capsules usagées dans le compartiment de traitement, par exemple par chute par gravité ou via un système entraîné par un moteur ;
- des moyens pour transporter la matière organique sortant des cartouches et/ou capsules traitées dans un bac de collecte fourni à cet effet ;
- un premier bac (A), conçu pour recevoir le marc de café ou d'une autre infusion qui a été séparé du reste de la cartouche et/ou capsule et qui constitue la matière de déchets organiques, constitué essentiellement d'un bac inférieur (A) conçu pour collecter les résidus organiques et porter la totalité de la structure portante de l'appareil électroménager ; et
- un second bac (C), conçu pour recevoir les restes des emballages des cartouches et/ou capsules qui ont été séparés des matières organiques et qui constituent des déchets recyclables comprenant du papier, de l'aluminium, du plastique, etc., constitué essentiellement d'un bac supérieur (C) pour collecter et stocker les emballages des cartouches et/ou capsules traitées ;
dans lequel :
- ledit compartiment pour le traitement des cartouches et/ou capsules est essentiellement constitué d'un bac (B) situé à l'intérieur du bac inférieur (A) et est muni de parois perforées, et en son sein est logé un agitateur à pales (4) mis en rotation au moyen d'un arbre (5) ;
- une vis sans fin cylindrique ou conique (3) est munie d'un diamètre variable et de départs multiples et/ou d'un pas variable, qui est fixe par rapport audit arbre (5) pour transporter les cartouches et/ou capsules qui ont été traitées et sont exemptes de matière organique en direction dudit bac supérieur (C) ;
- un convoyeur fixe (D) est placé sur la partie supérieure du bac perforé (B) où les cartouches et/ou capsules sont traitées ;
- un écrou de fixation à œillet (G) est fourni pour maintenir les diverses pièces fermement retenues ensemble ; et
- un moteur électrique (E) de préférence amovible est fourni, conçu pour être entraîné par l'utilisateur pour faire tourner l'arbre (5) dès lors qu'au moins une cartouche et/ou capsule usagée à traiter est introduite.

2. Appareil selon la revendication 1, **caractérisé en ce que** lesdites une ou plusieurs pales de l'agitateur inférieur (4) sont de forme et de taille différentes pour découper/déchirer l'emballage de chaque capsule, ainsi que pour imposer un mouvement rotatoire sur les lambeaux ou les capsules qui génère la force centrifuge nécessaire pour obtenir une séparation mécanique de la matière organique du reste de la capsule et la sortie simultanée de ladite matière organique du compartiment de traitement (B) à travers une pluralité de trous ou de fentes autonettoyant(e)s fourni(e)s à cet effet sur la surface latérale du compartiment de traitement (B) lui-même.

3. Appareil selon la revendication 2, **caractérisé en ce qu'**il prévoit un corps central comprenant des moyens pour transporter l'emballage vide de chaque capsule, qui consiste essentiellement en une vis sans fin conique (3) enveloppée dans un convoyeur conique fixe (D), qui est conçu pour guider la matière que la vis sans fin transporte.

4. Appareil selon la revendication 3, **caractérisé en ce que** la vis sans fin génère également un mouvement d'air qui est apte à entraîner et transporter vers le haut uniquement les emballages vides, qui sont particulièrement légers car ils sont exempts de leur contenu organique.

5. Appareil selon la revendication 2, **caractérisé en ce que** la surface interne des parois perforées du compartiment (B) pour le traitement des capsules est munie d'éléments en relief ou d'évidements positionnés de manière appropriée pour empêcher les capsules de rester possiblement coincées sur les pales de l'agitateur (4) et de tourner conjointement avec elles sans se déchirer.

6. Appareil selon l'une quelconque des revendications précédentes, **caractérisé en ce que** le moteur électrique (E) est dans la partie supérieure du dispositif ou sinon dans la partie inférieure de celui-ci.

7. Appareil selon l'une quelconque des revendications précédentes, **caractérisé en ce que** le cycle de fonctionnement est géré manuellement par l'utilisateur, c'est-à-dire par la vérification visuelle de sa progression, ou sinon automatiquement sous la commande d'une carte électronique qui, au moyen de capteurs appropriés positionnés à des points stratégiques, maintient l'appareil dans des conditions d'exécution sûres et vérifie la présence de capsules à traiter pour activer l'appareil lorsque nécessaire.

8. Appareil selon la revendication 7, **caractérisé en ce qu'**il comprend un système électrique ayant au moins deux boutons poussoirs :
- un interrupteur MARCHE/ARRÊT principal ; et
- un interrupteur pour le démarrage du cycle de traitement.

9. Appareil selon la revendication 8, **caractérisé en ce qu'**il prévoit des voyants qui signalent que l'appareil selon l'invention est en marche, que des capsules à traiter sont présentes, que le traitement est terminé.
